Europäisches Patentamt

European Patent Office

Office européen des brevets

(19)

(11) Publication number : **0 658 601 A1**

## EUROPEAN PATENT APPLICATION

(12)

(21) Application number : **94309331.0**

(22) Date of filing : **14.12.94**

(51) Int. Cl.$^6$ : **C08L 75/04,** C08J 9/00

(30) Priority : **16.12.93 US 168427**

(43) Date of publication of application :
**21.06.95 Bulletin 95/25**

(84) Designated Contracting States :
**BE DE FR GB IT NL**

(71) Applicant : **ARCO Chemical Technology, L.P.**
**Two Greenville Crossing**
**4001 Kennett Pike, Suite 238**
**Greenville, Delaware 19807 (US)**

(72) Inventor : **Hayes, John E.**
**1102 South Dolton Court**
**Wilmington, Delaware 19810 (US)**
Inventor : **Gunton, Catherine I.**
**13831 Round Oak Court**
**Houston, Texas 77059 (US)**

(74) Representative : **Cropp, John Anthony David et**
**al**
**MATHYS & SQUIRE**
**100 Grays Inn Road**
**London, WC1X 8AL (GB)**

(54) **Halogenated polyaromatic resins as flame retardant additives for polyurethane compositions.**

(57)    Polyurethane foams having improved flame retardant properties employing small quantities of halogenated polyaromatic resin flame-retardant additive have been discovered. Brominated polystyrene resin is particularly preferred. The additives may be physically suspended in the polyol prior to reaction with a polyisocyanate in the presence of a polyurethane catalyst in a conventional manner to produce improved polyurethane foams. The additives are not chemically bound to other components in the foam, such as the polyol. Because small quantities of the additives are used, the physical properties of the foams are not adversely affected by their presence.

EP 0 658 601 A1

The invention relates to the polyurethane foams and methods for their preparation, and in one aspect, more particularly relates to polyurethane foams having enhanced flame retardant properties through the use of solid additives.

Background of the Invention

Polyurethane foams, formed by the reaction of a polyisocyanate with a polyhydroxyl-containing compound in the presence of a suitable catalyst, are widely accepted as padding materials for cushions in furniture, automobiles and the like. Such foams typically burn readily, and considerable effort has been devoted to reducing the flammability of the foams. One technique by which this may be done is through the use of additives to the foam that retard its flammability or help to extinguish the burning foam should it ignite. Known flame retardant additives include 2,3-dibromo-1,4-butenediol; tris(2-chloroethyl)phosphate and triethylphosphate, for example. However, a disadvantage of using the phosphate-containing additives is that often relatively large quantities of the expensive materials must be used, higher than about 1%. Additionally, liquid phosphorus and halogen-containing flame retardants create a plasticizing effect which causes the polyurethane foam to be reduced in hardness, lower in compressive strength and increased in density so that the foam is detrimentally affected. Ideally, the load bearing properties of the foams, such as ILD - indentation load deflection and CFD - compression force deflection, should not be adversely affected by the presence of the additive. These conventional flame retardants are also somewhat volatile and may evaporate out of the polyurethane foam over time, thus decreasing the available fire retardancy. Finally, there are indications that these materials may be corrosive to certain metals on which the foams are applied.

Considerable research has been conducted on flame retardant additives for polyurethane foams. For example, melamine is a common flame retardant additive for polyurethane foams; see, for example, U.S. Pat. No. 4,221,875; UK Patent Applications GB 2,177,405A and GB 2,177,406A.

It is further well known to use polyvinyl chloride in polyurethane compositions. U.S. Pat. No. 3,931,062 to Cobbledick teaches that when a minor amount of an oxide, hydroxide or basic salt of certain metals from Group 2a of the Periodic Table is introduced into a formulation for low density flexible and semiflexible hot-molded flame-retardant polyetherurethane foam compositions which also contain finely-divided solid chlorine-containing polymeric resins, zinc oxide (ZnO) and antimony trioxide ($Sb_2O_3$), and optionally a chlorinated paraffin, the resulting foams can be prepared commercially with good reproducibility and good stream stability.

Heat discoloration of polyurethane foams containing halogen-containing polymers such as polyvinyl chloride is reduced or prevented by the use of catalyst systems consisting of combinations of polyol-soluble organic stannous compounds with polyol-soluble organic bismuth and/or antimony compounds, optionally, with certain sterically hindered tertiary amines such as N-methyl dicyclohexyl amine, according to U.S. Pat. No. 3,714,077 to Cobbledick, et al.

Similarly, U.S. Pat. No. 3,574,149 to Harrington mentions that low density, flexible and semiflexible polyetherurethane foams containing halogen-containing polymers such as polyvinyl chloride are rendered resistant to flame to the point of being self-extinguishing by the use of a minor amount of zinc oxide (French process) and antimony oxide. Likewise, U.S. Pat. No. 3,718,611 to Maxey, et al. lists polyvinyl chloride as a suitable halogen containing solid polymeric resin without using it in an actual example to determine its effects. This patent discloses that the discoloration of low density, flexible polyurethane foams containing halogen containing polymers such as polyvinyl chloride is reduced or prevented by using certain sterically hindered tertiary amines as catalysts, *i.e.* those containing a well-shielded nitrogen atom, for example, N-methyl dicyclohexyl amine.

The above-mentioned patents list polymers of vinyl fluoride, vinyl chloride and vinyl bromide as halogen-containing solid polymers which may be used in flexible polyurethane foams, but also merely list other polymers which may be useful, including vinylidene chloride. Monomers such as vinyl acetate; acrylonitrile; methacrylonitrile; dimethyl or diethyl maleate or fumarate; methyl acrylate; methyl methacrylate; ethyl ethacrylate, and vinyl stearate are mentioned as co-monomers to be used in a minor amount with the first mentioned monomers. Other halogen-containing resins are listed as useful, such as hydrolyzed or partially hydrolyzed copolymers of a major amount of vinyl chloride and a minor amount of vinyl acetate. Other resins are listed including chlorinated rubber, chlorinated polyethylene, chlorinated polyvinyl chloride and polytetrafluoroethylene.

With a similar teaching is U.S. Pat. No. 3,738,953 to Anorga, et al. which also suggests using polyvinyl chloride as a flame retardant in polyurethane foams. The patent generally teaches flexible polyurethane foams having flame retardant properties which are the product of reaction, under foam producing conditions, of a combination of (a) a mixture of toluene diisocyanate and polymethylene polyphenyl isocyanate; (b) a polyether polyol; (c) antimony oxide; (d) a polyhalogenated aromatic compound or a polybrominated diol; and (e) a highly chlorinated hydrocarbon polymer. The foams are said to meet the very stringent tests for fire retardance re-

2

quired of seat cushioning, mattresses, and like materials in aircraft, institutions such as hospitals, convalescent homes and the like. The (e) highly chlorinated hydrocarbon polymers include polychloroprene (neoprene), chlorinated natural rubber, polyvinyl chloride, poly(vinylidene chloride), including chlorinated derivatives of the latter, as well as copolymers of vinyl chloride with other vinyl monomers such as vinyl acetate, methyl acrylate, methyl methacrylate, acrylonitrile, vinylidene chloride and the like.

Also of interest is U.S. Pat. No. 4,711,941 to U. E. Younes of ARCO Chemical Company, which relates to a non-cellular, moldable composition having a novel random bromostyrene-containing copolymer, a thermoplastic resin, preferably polycarbonate, and a flame-retardant synergist. The list of suitable synergists includes antimony trioxide, antimony pentoxide, arsenic trioxide, arsenic pentoxide, zinc sulfate, zinc oxide, zinc borate, bismuth oxide, molybdenum oxide, tungsten oxide, stannous oxide, and their mixtures, with antimony trioxide being the preferred synergist.

U.S. Pat. No. 5,250,581 describes polymer polyols based on halogenated aromatic monomers such as tribromostyrene, which give polyurethane foams with improved flame retardant properties. Replacing conventional styrene/acrylonitrile (SAN) polymer polyols with tribromostyrene (TBS)/acrylonitrile polymer polyols allows the preparation of polyurethane foams which pass the British Standard 5852, Part 2, Ignition Source 5 Combustion Test and having better ASTM E-906 values without the need for solid fillers such as melamine or aluminum trihydrate, although these and other flame retardant additives may be optionally employed as well.

Nonetheless, flammability of polyurethane foams continues to be an important issue, and improvements in this area are always sought after. While additives are useful in this regard, as noted, many must be used in such large quantities that the resulting foam characteristics are degraded. If additives must be used, it would be desirable to use only one, and preferably one which has less undesirable effects on foam properties as compared with currently available additives.

## Summary of the Invention

Accordingly, it is an object of the present invention to provide a polyurethane foam composition having improved flame retardant characteristics.

It is another object of the present invention to provide a flame retardant polyurethane foam using an additive that may be easily incorporated into conventional foam formulations.

Still another object of the present invention is to provide a flame retardant that does not have many of the disadvantages of conventional flame retardant additives, and which does not appreciably adversely affect the physical properties of the polyurethane foam.

In carrying out these and other objects of the invention, there is provided, in one aspect, a fire retardant polyurethane composition which is the reaction product of a polyol with a polyisocyanate in the presence of a polyurethane catalyst, and further in the presence of a halogenated polyaromatic resin additive. The solid halogenated polyaromatic resin additive, such as brominated polystyrene, is not chemically bound to a component of the foam, such as the polyol, but rather is a separate additive.

## Detailed Description of the Invention

It has been discovered that a polyurethane foam composition that is composed of a conventional polyether polyol, polyisocyanate and a crosslinker or catalyst, may have its flame retarding characteristics improved by incorporating into the polyurethane foam formulation matrix resins of halogenated polystyrene, in sufficient amounts. These resins are solids. However, it has also been surprisingly discovered that these additives need only be present in relatively small amounts.

In particular, brominated polystyrene resins are potential complete replacements for melamine in foams for the British Standard 5852, Part 2, Ignition Source 5 Test of the British Furniture and Furnishings Fire Safety Regulations of 1988 (abbreviated herein as BS 5852) and California Technical Bulletin 133 (abbreviated herein as Cal 133) applications. Combinations of brominated polystyrene resins with other solid additives, for example, melamine, can potentially be used to eliminate the liquid fire retardant additive in these applications, resulting in a non-fugitive fire retardant system. "Non-fugitive" means the fire retardant additive may not escape from the foam composition, such as by evaporation, prior to the time it may be called upon to serve its fire retardant function. Another potential use is to reduce the requirement for liquid fire retardant in California Technical Bulletin 117 (abbreviated herein as Cal 117), MVSS-302 applications and similar tests, again resulting in superior foam physical properties.

Advantages of brominated polystyrene resins are that the materials are commercially available and could be handled by foamers in the same manner and equipment as they are handling melamine. Thus, there would be no need for change in equipment and a new addition procedure need not be learned.

Therefore, the halogenated polyaromatic resin may be employed in a powder form and, in one aspect, may be suspended in the polyol prior to foaming to give a polymer polyol. This is a physical dispersion. In contrast to the polymer polyols and polyurethane foams of U.S. Pat. No. 5,250,581, the halogenated polyaromatic resins of the present invention are included as additives which are not chemically bound to any foam component, but are physically present in the polyurethane matrix. In U.S. Pat. No. 5,250,581, the tribromostyrene monomers, *e.g.*, are chemically bound or grafted onto the polymer matrix. It is not apparent or obvious that a material will exhibit flame retardant characteristics when used as a non-reactive additive in its polymeric form simply because when it is chemically incorporated into the polymeric network, such as a polymer polyol, it will have a flame retardant effect in the ultimate polyurethane. Again, in the present invention, the halogenated polystyrene resin may be physically dispersed in the polyol, but there are no chemical bonds between the solid additive and the polyol. In the case of the polymer polyols of U.S. Pat. No. 5,250,581, the polymeric solid is chemically reacted or grafted to the polyol, thus creating a stable dispersion.

The halogenated polystyrene resin may contain from about 40 to about 70% halide by weight, preferably from about 59 to about 68%. The halogenated polystyrene resin may be present in the formulation in an amount ranging from about 1 pph to about 100 pph based on the polyol, more preferably in a range from about 1 pph to about 50 pph, still more preferably in a range from about 1 pph to about 30 pph, and most preferably in a range from about 1 pph to about 20 pph. It has also been discovered that melamine may be present in the polyurethane foam formulation of the present invention to further improve its flame retarding properties. The melamine may also be added, in the form of a powder, in an amount ranging from about 5 to about 70 wt.%, based on all of the components in the foam. Similarly, the additives of this invention may be used in conjunction with other components that have flame retarding ability including the polymer polyols having halogenated aromatic monomers as described in copending U.S. Pat. No. 5,250,581 incorporated by reference herein. The halogenated polystyrene resin additives may also be used in conjunction with liquid flame retardants, such as halogenated diphenyl oxide compounds and other commercially available materials commonly used as flame retardant synergists for polyurethane foams, such as antimony trioxide. The addition of other halogenated resins such as poly(vinyl chloride) and chlorinated poly(vinyl chloride) would also be expected to offer enhanced flame retardancy. Again, the halogenated polystyrene resins herein are additives modifying an existing foam product formulation, whereas polymer polyols made by polymerizing a halogenated aromatic compound *in situ* in a base polyol have the halogenated aromatic monomers chemically bound therein and any polymerized halogenated monomers therein are not physical additives.

It will be appreciated that the halide substituent on the halogenated polystyrene resin may be either chlorine or bromine. It is also anticipated that related halogenated polymers with aromatic rings would also be effective, such as those containing naphthalenic structures, as a non-limiting example. Suitable brominated polystyrene resins could be prepared by brominating polystyrene such as the products sold by Ferro Corporation under the trade name Pyro-Chek. These are commercial brominated polystyrene resins sold as a flame retardants for polystyrene resins, high temperature engineering resins, nylons and poly(ethylene terephthalate)s. These resins are not sold or recommended for use in polyurethane foams. Alternatively, the brominated polystyrene resins could be prepared by polymerizing brominated styrene monomers (mono-, di-, tri-, tetra-, etc. or mixtures thereof) such as the products sold by Great Lakes Chemical Corporation as PDBS (polydibromostyrene) or CN-323. However, it should be again noted that the present invention specifically excludes the possibility of polymerizing styrene monomers *in situ* in a polyol, as in U.S. Pat. No. 5,250,581. Rather, the halogenated polymers are included as an additive to a preformed polyol or polymer polyol.

In the case of brominated polystyrene, it is preferred that the unhalogenated "parent" resin is a homopolymer rather than a copolymer. Where the halogenation occurs on the aromatic group cannot be controlled with precision; further one or more halogen atom may be attached to any particular aromatic moiety. In the case of poly(brominated styrene), mixtures of tri-, di- and monobromostyrene can be used. Indeed, one commercial dibromostyrene product is predominantly dibromostyrene, with minor amounts of monobromostyrene and tribromostyrene.

Although it is expected that the invention will find its greatest utility in flexible polyurethane foams, it is anticipated that other polyurethane compositions could also benefit from the invention such as rigid, cellular foams and the like, which are all considered polyurethane compositions herein.

There are a number of distinctions between the present invention and that described in U.S. Pat. No. 4,711,941, incorporated by reference herein. For example, the present invention is applicable to free-rising cellular flexible polyurethane, whereas the compositions of the '941 patent relate only to non-cellular moldable materials, namely thermoplastic resins, and particularly polycarbonate - as contrasted with polyurethanes, which are not mentioned therein, and further are not thermoplastic. Further, the '941 patent requires the presence of a flame retardant synergist, *e.g.* one or more antimony oxides; a flame retardant synergist is explicitly absent herein, in one embodiment, although in other embodiments it could be used. Also, bromostyrene is used

4

only as a comonomer with other monomers in the '941 patent, such as styrene and substituted styrenes, and additionally an anhydride monomer which are required to be present. The instant invention can be practiced using homopolymerized bromostyrene, dibromostyrene, and tribromostyrene as non-limiting examples. In one embodiment, the other non-halogenated, but substituted styrenes and/or anhydride monomers are explicitly absent in the present resin additives.

In accordance with this invention, a variety of polyether polyols may be used to make the polyurethane foams. These include both ethylene oxide (EO) capped polyols and polyols not capped with EO. In one aspect, the polyol preferably has a molecular weight of from about 2000 to 6500, and is typically made by the reaction of an initiator having a plurality of reactive hydrogens thereon with one or more alkylene oxides. Suitable initiators include, but are not limited to, glycerin, alkanolamines, alkylamines, aryl or aromatic amines, sucrose, sorbitol, trimethylol propane (TMP), $\alpha$-methylglucoside, $\beta$-methylglucoside, or other methylglucoside, resins of phenol, aniline and mixed phenol aniline, such as methylenedianiline or bisphenol A, Mannich condensates and mixtures thereof, for example. The polyol may be made by alkoxylating the initiator with a desired number of moles of an alkylene oxide. Preferably, the alkylene oxide has two to four carbon atoms, and is thus, ethylene oxide, propylene oxide, butylene oxide or mixtures of these oxides. The oxides may be mixed upon addition, or may be added to the polyol initiator chain separately to form blocks or caps. In one aspect, a mixture of ethylene oxide and propylene oxide are added to the initiator. The alkoxylation may or may not be catalyzed; KOH is a commonly used catalyst, although others may be employed. For example, double metal cyanide catalysts may be employed, in particular zinc hexacyanocobaltate, and the polyols may be prepared in accordance with the methods described in U.S. Pat. Nos. 3,029,505; 3,900,518; 3,941,049 and 4,355,100, incorporated by reference herein. Alternatively, various polymer polyols may also be employed as completely replacing or in conjunction with suitable polyol components.

A catalyst is typically employed in preparing polyurethane foams in the conventional manner. Such catalysts may include one or more of the following:

(a) Tertiary amines such as trimethylamine; triethylamine; N-methylmorpholine; N-ethylmorpholine; N,N-dimethylbenzylamine; N,N-dimethylethanolamine; N,N,N',N'-tetramethyl-1,3-butanediamine; N,N-dimethylpiperazine; 1,4-diazobicyclo[2.2.2]octane and the like;

(b) Tertiary phosphines such as trialkylphosphines; dialkylbenzylphosphines, and the like;

(c) Strong bases, such as alkali and alkaline earth metal hydroxides; alkoxides; and phenoxides;

(d) Acidic metal salts of strong acids, such as ferric chloride; stannic chloride; stannous chloride; antimony trichloride; bismuth nitrate and chloride; and the like;

(e) Chelates of various metals such as those which can be obtained from acetylacetone; benzoylacetone; trifluoroacetyl acetone; ethyl acetoacetate; salicyclaldehyde; cyclopentanone-1-carboxylate; acetylacetoneimine; bisacetylacetonealkylenediamine; salicyclaldehydeimine; and the like, with various metals such as Be, Mg, Zn, Cd, Pd Ti, Zr, Sn, As, Bi, Cr, Mo, Mn, Fe, Co, and Ni;

(f) Alcoholates and phenolates of various metals, such as Ti(OR)$_4$; Sn(OR)$_4$; Al(OR)$_3$; and the like, wherein R is alkyl or aryl, and the reaction products of alcoholates with carboxylic acids, beta-diketones, and 2-(N,N-dialkylamino)alcohols;

(g) Salts of organic acids with a variety of metals, such as alkali metals, alkaline earth metals, Al, Sn, Pb, Mn, Co, Ni and Cu, including, for example, sodium acetate, stannous octoate, stannous oleate, lead octoate, metallic driers such as manganese and cobalt naphthenate, and the like; and

(h) Organometallic derivatives of tetravalent tin, trivalent and pentavalent As, Sb, and Bi and metal carbonyls of iron and cobalt.

Of course, combinations of any of the above polyurethane catalysts may be employed. Usually, the amount of catalyst employed ranges from about 0.01 to about 5.0 pbw percent, based on 100 pbw of the polyol. More often, the amount of the catalyst used is about 0.2 to about 2.0 pbw.

The polyol component for the polyurethane foam is reacted in the presence of one or more of the above catalysts with a polyisocyanate according to conventional procedures. The polyisocyanate used may be any aromatic or aliphatic polyisocyanate, such as toluene diisocyanates (TDIs); polymeric isocyanates and aliphatic diisocyanates. Typical aromatic polyisocyanates include, but are not limited to, *m*-phenylene diisocyanate; *p*-phenylene diisocyanate; polymethylene polyphenylisocyanate; 2,4-toluene diisocyanate; 2,6-toluene diisocyanate; dianisidine diisocyanate; bitolylene diisocyanate; naphthalene-1,4-diisocyanate; diphenylene-4,4'-diisocyanate; aliphatic-aromatic diisocyanates, such as xylylene-1,4-diisocyanate; xylylene-1,2-diisocyanate; xylylene-1,3-diisocyanate; *bis*(4-isocyanatophenyl)methane; *bis*(3-methyl-4-isocyanatophenyl)methane; and 4,4'-diphenylpropane diisocyanate. Suitable aliphatic diisocyanates would include isophorone diisocyanate; hexamethylene diisocyanate; and methylene-*bis*-cyclohexylisocyanate. Toluene diisocyanates are preferred, in one aspect of the invention.

Aromatic polyisocyanates suitable for use include methylene-bridged polyphenyl polyisocyanate mixtures which have a functionality of from about 2 to about 4. These latter isocyanate compounds are generally produced by the phosgenation of corresponding methylene bridged polyphenyl polyamines, which are conventionally produced by the reaction of formaldehyde and primary aromatic amines, such as aniline, in the presence of hydrochloric acid and/or other acidic catalysts. The isocyanate index may range from about 85 to about 120.

Foaming is carried out in the presence of water and optionally, additional organic blowing agents. The water is normally used in amounts of 0.5 to 15 parts by weight, preferably, 1.0 to 10 pbw based on 100 pbw of the polyol present. The organic blowing agents optionally used along with the water are known in the art and are, for example, monofluorotrichloromethane, difluorodichloromethane, methylene dichloride and others generally known in the art. Additives to regulate the cell size and the cell structure, for example, silicone surfactants such as dimethylpolysiloxanes, may also be added to the foaming mixture. In this invention, it is highly recommended that a relatively low activity surfactant and/or a reduced amount of a high activity silicone be employed. Fillers, dyes or plasticizers of known types may also be used, of course. These and other additives are well known to those skilled in the art.

It is anticipated that the fire retardant additives of the present invention would also be useful in the preparation of molded polyurethane foams. Molded polyurethane foams are prepared somewhat similarly to slab foams, except that they are cast in a mold, rather than allowed to rise freely. For more information on preparing polyurethanes, particularly flexible polyurethanes, see U.S. Pat. Nos. 4,338,408; 4,342,687 and 4,381,353, incorporated by reference herein. Conventional reaction conditions may be employed in making the polyurethane foams of this invention.

The practice of this invention is further demonstrated by the following examples.

*Procedure:* The polyurethane foams were separately prepared by charging the amounts of polyol together with the flame retardant additives of this invention, if present; water; catalyst; surfactants; etc. indicated into a one-liter cylindrical container equipped with a mechanical stirrer. The mixture was stirred for about 30 seconds at about 2500 rpm, and the indicated amount of polyisocyanate was introduced into the container with stirring for about 10 seconds. The contents of the container were then immediately poured into a cardboard box and the foam was allowed to rise. After the foam rise was completed, the foam was allowed to cure at room temperature for about one week.

Brominated polystyrene from Ferro Corporation (Pyro-Chek 68PB) has been used to make bench foams of 1.7 to 2.0 lb/ft³ density, containing 6% resin by weight of polyol and 6 php liquid fire retardant additive that passed the BS 5852 Part II (Ignition Source #5) test.

## Examples 1-12

Tables I and II show brominated polystyrene as a replacement for melamine in flexible polyurethane foams with the addition of liquid fire retardant additives as synergists. Foams in Examples 1 through 4 passed the BS 5852 Part II (Ignition Source #5) test. Comparison of Example 1 with Example 2 shows that Pyro-Chek 68PB performs at least as well as melamine in combination with Firemaster 836. However, when Fyrol FR-2 is used as the synergistic additive, less Fyrol FR-2 is required with melamine (Example 3) than with Pyro-Chek 68PB (Example 4) to achieve the same weight loss. Also of note is Example 12 which contained only 6 php Firemaster 836; this foam failed the test, highlighting the effectiveness of brominated polystyrene as a fire retardant.

Comparison of the physical properties of foams containing melamine with those containing the same amount of brominated polystyrene shows that, at the same water level, the latter tend to be less dense and have superior set properties.

EP 0 658 601 A1

## TABLE I

### Brominated Polystyrene Additives in Flexible Polyurethane Foams

| Component, pbw | 1 | 2 | 3 | 4 | 5 | 6 | 7 |
|---|---|---|---|---|---|---|---|
| ARCOL® 1352 | 30 | 30 | 30 | 30 | 30 | 30 | 30 |
| ARCOL® 1342 | 70 | 70 | 70 | 70 | 70 | 70 | 70 |
| Water | 3.9 | 3.9 | 3.9 | 3.9 | 3.9 | 3.9 | 3.9 |
| Diethanolamine | 1.7 | 1.7 | 1.7 | 1.7 | 1.7 | 1.7 | 1.7 |
| Catalyst C-183 | 0.3 | 0.3 | 0.3 | 0.3 | 0.3 | 0.3 | 0.3 |
| Dabco T-10 | 0.14 | 0.14 | 0.14 | 0.14 | 0.14 | 0.14 | 0.14 |
| Surfactant DC 5043 | 0.8 | 0.8 | 0.8 | 0.8 | 0.8 | 0.8 | 0.8 |
| **Melamine** | | **10** | **10** | | | | |
| **Pyro-Chek 68PB** | **10** | | | **10** | **15** | **20** | **20** |
| **Firemaster 836** | **6** | **6** | | | **6** | **6** | **8** |
| **Fyrol FR-2** | | | **5** | **8** | | | |
| TDI (80/20) | 53.62 | 53.62 | 53.62 | 53.62 | 52.67 | 52.67 | 52.67 |
| TDI Index | 114 | 114 | 114 | 114 | 112 | 112 | 112 |
| Density, lb/ft$^3$ | 1.76 | 1.97 | 1.80 | 1.71 | 1.69 | 1.71 | 2.25 |
| Resiliency, % | 55 | 61 | 61 | 59 | 60 | 60 | 49 |
| Porosity, cfm/sq. ft. | 43 | 37 | 40 | 74 | 51 | 51 | 51 |
| CFD 25%, psi | 0.31 | 0.32 | 0.27 | 0.22 | | | |
| CFD 65%, psi | 0.75 | 0.92 | 0.70 | 0.58 | | | |
| IFD 25%, psi | | | | | 21 | 21.25 | 29 |
| IFD 65%, psi | | | | | 49 | 50 | 80.7 |
| Ratio, 65/25 | 2.42 | 2.88 | 2.59 | 2.64 | 2.33 | 2.35 | 2.78 |
| Tensile Strength, psi | 11.6 | 14.5 | 13.0 | 10.5 | 12.62 | 11.05 | 10.13 |
| Elongation, % | 97 | 109 | 101 | 105 | 129 | 105 | 84 |
| Tear Strength, psi | 1.17 | 1.12 | 1.06 | 1.04 | 1.28 | 1.23 | 0.81 |
| 90% Compression Set, % | 7.3 | 9.2 | 7.4 | 5.8 | 5.33 | 5.66 | 5.46 |
| 90% Humid Aged Comp. Set, % | 12.0 | 17.9 | 17.6 | 12.2 | 10.95 | 10.74 | 11.95 |
| BS 5852 Part II (Ignition Source #5) Results | | | | | | | |
| Burn time | 3'15" | 3'25" | 3'41" | 3'26" | N/A | N/A | N/A |
| Weight loss, g. | 35.6 | 37.4 | 42.7 | 42.5 | N/A | N/A | N/A |

## TABLE II
### Brominated Polystyrene Additives in Flexible Polyurethane Foams

| Component, pbw | 8 | 9 | 10 | 11 | 12 |
|---|---|---|---|---|---|
| ARCOL® 1352 | 30 | 30 | 30 | 30 | 30 |
| ARCOL® 1342 | 70 | 70 | 70 | 70 | 70 |
| Water | 3.9 | 3.9 | 3.9 | 3.9 | 3.9 |
| Diethanolamine | 1.7 | 1.7 | 1.7 | 1.7 | 1.7 |
| Catalyst C-183 | 0.3 | 0.3 | 0.3 | 0.3 | 0.3 |
| Dabco T-10 | 0.14 | 0.14 | 0.14 | 0.14 | 0.14 |
| Surfactant DC 5043 | 0.8 | 0.8 | 0.8 | 0.8 | 0.8 |
| **Pyro-Chek 68PB** | **10** | **10** | **10** | **10** | |
| **Firemaster 836** | **6** | | | | 6 |
| **Firebrake ZB** | | **6** | | | |
| **Ammonium Pentaborate** | | | **6** | | |
| **Dimethyl methylphosphonate** | | | | **6** | |
| TDI (80/20) | 53.62 | 53.62 | 53.62 | 53.62 | 53.62 |
| TDI Index | 114 | 114 | 114 | 114 | 114 |
| Density, lb/ft$^3$ | 1.67 | 1.69 | 1.69 | Foam | 1.73 |
| Resiliency, % | 54 | 48 | 55 | Collapse | 54 |
| Porosity, cfm/sq. ft. | 43 | 27 | 29 | | 43 |
| CFD 25%, psi | 0.32 | 0.35 | 0.31 | | 0.28 |
| CFD 65%, psi | 0.62 | 0.79 | 0.72 | | 0.67 |
| Ratio, 65/25 | 1.94 | 2.26 | 2.32 | | 2.39 |
| Tensile Strength, psi | 11.8 | 11.4 | 13.0 | | 13.3 |
| Elongation, % | 116 | 105 | 126 | | 109 |
| Tear Strength, psi | 1.14 | 0.93 | 1.47 | | 1.54 |
| 90% Compression Set, % | 8.0 | 7.3 | 9.3 | | 7.8 |
| 90% Humid Aged Comp. Set, % | 10.0 | 13.0 | 64.9 | | 12.0 |
| 50% Wet Set, % | 33.1 | 32.5 | 34.7 | | 23.6 |
| BS 5852 Part II (Ignition Source #5) Results | | | | | |
| Burn time | 3'39" | 1'45" | 2'00" | | 4'35" |
| Weight loss, g. | 39.3 | FAIL | FAIL | N/A | FAIL |

### Examples 13-18

Table III shows foams which passed the California Technical Bulletin 133 (Cal 133) test when tested in combination with a nylon fabric (8400 form Chatham Manufacturing) backcoated with 5 oz./sq. yd. fire retardant latex (Rhone Poulonc). All the foams contained either dibromostyrene/acrylonitrile (DBS/AN) or tribromostyrene/acrylonitrile (TBS/AN) dispersion polymer polyols. The fire retardant additives were selected from melamine, Pyro-Chek 68PB, Pyro-Chek LM (another brominated polystyrene available from Ferro Corporation) and Firemaster 836. Comparison of Examples 15 and 16 with Example 14 shows that brominated polystyrene may be used in combination with melamine to eliminate the liquid fire-retardant from the formulation resulting in a non-volatile flame retardant system. Example 17 illustrates another non-volatile flame retardant system in which brominated polystyrene and a polybrominated styrene/acrylonitrile polymer polyol are used in sole combination. Example 18 shows that melamine, brominated polystyrene and liquid fire retardants may be used in combination to pass Cal 133 or other flammability tests.

EP 0 658 601 A1

## TABLE III
### Brominated Polystyrene Additives in Flexible Polyurethane Foams

| Component, pbw | 13 | 14 | 15 | 16 | 17 | 18 |
|---|---|---|---|---|---|---|
| DBS Dispersion polyol (20% solids) | 50 | 50 | 50 | 50 | 50 | 50 |
| ARCOL® 1415 | 50 | 50 | 50 | 50 | 50 | 50 |
| TBS Dispersion polyol (20% solids) | | | | | | |
| Diethanolamine LF | 1.4 | 1.4 | 1.4 | 1.4 | 1.4 | 1.4 |
| Water | 2.4 | 2.4 | 2.4 | 2.4 | 2.4 | 2.4 |
| Catalyst 33LV | 0.24 | 0.24 | 0.24 | 0.24 | 0.24 | 0.24 |
| Catalyst A1 | 0.1 | 0.1 | 0.1 | 0.1 | 0.1 | 0.1 |
| Surfactant DC 5043 | 1.5 | 1.4 | 1.4 | 1.4 | 1.4 | 1.4 |
| Dabco T-10 | 0.36 | 0.36 | 0.4 | 0.36 | 0.36 | 0.4 |
| Melamine | 50 | 30 | 30 | 20 | 20 | 20 |
| Pyro-Chek 68PB | | | 10 | 10 | | 10 |
| Pyro-Chek LM | | | | | | |
| Firemaster 836 | | 12 | | | | 5 |
| TDI (80/20) | 38 | 38 | 37.7 | 38 | 38 | 37.7 |
| TDI Index | 107 | 107 | 110 | 107 | 107 | 110 |
| Density, lb/ft³ | 3.10 | 2.81 | 3.03 | 2.89 | 3.07 | 2.96 |
| CAL 133 Result | PASS | PASS | PASS | PASS | PASS | PASS |

### British Standard 5852, Part 2, Ignition Source 5 Test of the British Furniture and Furnishings Fire Safety Regulations of 1988 (BS 5852)

The BS 5852, Part II (Ignition Source 5) Test is a mock-up chair test using a wooden crib ignition source. Foam cushions, seat back 18" x 18" x 3" and cushion 18" x 12" x 3", are mounted on a metal frame and covered with flame retarded fabric (100% flame retardant polyester fiber with mass 200 g/m² suppled by Lister and Co., Manningham Mills, Bradford, West Yorkshire). A wooden crib (17 ± 1 g) is placed in the center of the seat cushion against the seat back. Isopropanol (1.4 ml) is added to a cotton pad fixed into the bottom of the crib and ignited. The criteria for passing the test are that the composite is self-extinguishing within 10 minutes and has a weight loss less than 60 g.

California Technical Bulletin 133 Procedure (January 1992)

In these tests, the sample is a mock-up chair consisting of two foam cushions (18" x 18" x 3") covered with the chosen fabric which forms the back and the seat. The cushions are supported by a steel frame. The sample is located in the corner, no further than 10 in. from either wall, in a burn room 12 x 10 x 8 ft. having a doorway opening 38 x 81 in. The ignition source is a square propane gas burner (gas flow 13 liter per minute) located centrally 1 in above the seat surface and 2 in from the furniture back. Ignition is maintained for 80 seconds at which point the gas burner is removed. Seating furniture fails to meet the requirements of the test procedure if any of the following criteria are exceeded:

1. The temperature increase at the ceiling is greater than 200°F.
2. A temperature increase at 4 ft. is greater than 50°F.
3. The smoke opacity at 4 ft. is greater than 75%.
4. The carbon monoxide concentration in the room is greater than 1000 ppm for 5 min.
5. The weight loss due to combustion is 3 lb. or more in the first 10 minutes.

Many modifications may be made in the polyurethane compositions of this invention and their method of production without departing from the spirit and scope of the invention, which are defined only by the appended claims. For example, one skilled in the art could adjust the proportions and modes of addition within the parameters set forth to provide polyurethane foams with particularly advantageous properties.

It may be found that the use of halogenated polyaromatic resins in conjunction with another polymer resin additive or flame retardant additive may provide desirable polyurethane compositions.

## GLOSSARY

| | |
|---|---|
| A-1 | A catalyst solution consisting of 70 wt.% bis(2-dimethylaminoethyl)ether and 30 wt.% dipropylene glycol made by Union Carbide Chemicals and Plastics Corp. |
| ARCOL® 1342 | A glycerin started polyether of propylene oxide and ethylene oxide having a hydroxyl number of 35 and a primary hydroxyl group content of 80% of the total hydroxyl content made by ARCO Chemical Co. |
| ARCOL® 1352 | A polymer modified polyol of styrene/acrylonitrile (S/AN in a ratio of 75/25) content of about 20% by weight in ARCOL 1342 made by ARCO Chemical Co. The hydroxyl number is 28. |
| ARCOL® 1415 | A glycerin started polyether of propylene oxide and ethylene oxide, having a hydroxyl number of 56 and a primary hydroxyl group content of 80% of the total hydroxyl content, made by ARCO Chemical Company. |
| C-183 | An amine catalyst manufactured by Union Carbide Corp. |
| Dabco 33LV | A solution of 33% triethylenediamine catalyst in dipropylene glycol sold by Air Products and Chemicals Inc. |
| Dabco T-9 | Stannous octoate made by Air Products and Chemicals Inc. |
| Dabco T-10 | 50% stannous octoate, 50% dioctal phthalate made by Air Products and Chemicals Inc. |
| DC 5043 | Silicone A silicone surfactant manufactured by Union Carbide Corp. |
| DEOA | Diethanolamine. (Also known as DEOA LF) |
| DMMP | Dimethyl methylphosphonate. |
| DBS/AN | Dispersion A polymer modified polyol of dibromostyrene/acrylonitrile (DBS/AN in a ratio of 90/10) content of about 20% by weight; made according to U.S. patent application Serial No. 07/588,648. The hydroxyl number is 28. |
| Firebrake ZB | Zinc borate flame retardant additive from Borax. |
| Firemaster 836 | A halogenated phosphate ester flame retardant made by Great Lakes Chemical Corporation. |
| Fyrol FR-2 | Tri(1,3-dichloropropyl)phosphate made by Stauffer Chemical Co. |
| PDBS-10 | Polymerized brominated styrene monomer made by Great Lakes Chemical Corporation. |
| Pyrochek 68PB | Brominated polystyrene resin sold by Ferro Corporation. |
| Pyrochek LM | Brominated polystyrene resin sold by Ferro Corporation. |
| TBS/AN Dispersion | A polymer modified polyol of tribromostyrene/acrylonitrile (TBS/AN in a ratio of 90/10) content of about 20% by weight; made according to U.S. patent application Serial No. 07/588,648. The hydroxyl number is 28. |

## Claims

1. A fire retardant polyurethane composition comprising the reaction product of a polyol with a polyisocyanate in the presence of a polyurethane catalyst, and further in the presence of a halogenated polyaromatic resin additive not chemically bound to the polyol.

2. A fire retardant polyurethane composition as claimed in claim 1 characterised in that the amount of halogenated polyaromatic resin is in the range of from about 1 to about 100 pph, based on the polyol.

3. A fire retardant polyurethane composition as claimed in claim 1 characterised in that the amount of halogenated polyaromatic resin is in the range of from about 1 to about 50 pph, based on the polyol.

4. A fire retardant polyurethane composition as claimed in claim 1 characterised in that the amount of halogenated polyaromatic resin is in the range of from about 1 to about 30 pph, based on the polyol.

5. A fire retardant polyurethane composition as claimed in any of claims 1 to 4 characterised in that the halogen content in the halogenated polyaromatic resin ranges from 40 to 70% by weight, and the halogen is selected from chlorine and bromine.

6. A fire retardant polyurethane composition as claimed in any preceding claim characterised in that the halogenated polyaromatic resin is a halogenated polystyrene resin made by halogenating polystyrene or polymerizing halogenated styrene monomer.

7. A fire retardant polyurethane composition as claimed in any preceding claim characterised in that the halogenated polyaromatic resin is brominated polystyrene.

8. A fire retardant polyurethane composition as claimed in any preceding claim characterised in that the sole flame retardant additives consist of the halogenated polystyrene resin and melamine.

9. A fire retardant polyurethane composition as claimed in any one of claims 1 to 7 characterised in that the sole flame retardant additives consist of the halogenated polystyrene resin and liquid flame retardant additives.

10. A fire retardant polyurethane composition as claimed in claim 1 characterised in that the halogenated polyaromatic resin additive comprises a brominated polystyrene resin additive having from about 40 to about 70% bromine therein, by weight, and is the sole flame retardant additive, the amount of brominated polystyrene resin is in the range of from about 1 to 100 pph, based on the polyol, and the brominated polystyrene resin additive is physically dispersed in the polyol prior to formation of the fire retardant polyurethane composition.

11. A method for preparing fire retardant polyurethane compositions comprising reacting a polyol with a polyisocyanate in the presence of a polyurethane catalyst, and further in the presence of a halogenated polyaromatic resin additive not chemically bound to the polyol.

12. A method as claimed in claim 11 characterised in that the amount of halogenated polyaromatic resin is in the range of from about 1 to 100 pph, based on the polyol.

13. A method as claimed in claim 11 characterised in that the amount of halogenated polyaromatic resin is in the range of from about 1 to about 50 pph, based on the polyol.

14. A method as claimed in claim 11 characterised in that the amount of halogenated polyaromatic resin is in the range of from about 1 to about 30 pph, based on the polyol.

15. A method as claimed in any one of claims 11 to 14 characterised in that the halogenated polyaromatic resin is as specified in any of claims 5 to 7.

16. A method as claimed in any one of claims 11 to 15 characterised in that the sole flame retardant additives consist of the halogenated polystyrene resin and melamine.

17. A method as claimed in any one of claims 11 to 15 characterised in that the sole flame retardant additives consist of the halogenated polystyrene resin and liquid flame retardant additives.

18. A method as claimed in any one of claims 11 to 17 comprising
physically dispersing a brominated polystyrene resin additive in a polyol, and thereafter
reacting the polyol with a polyisocyanate in the presence of a polyurethane catalyst.

19. A method as claimed in any one of claims 11 to 18 characterised in that the sole flame retardant additives consist of the halogenated polystyrene resin and melamine.

20. A method as claimed in any one of claims 11 to 18 characterised in that the sole flame retardant additives consist of the halogenated polystyrene resin and liquid flame retardant additives.

| European Patent Office | EUROPEAN SEARCH REPORT | Application Number EP 94 30 9331 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-3 487 030 (PRAETZEL ET AL) * column 3, line 8 - column 5, line 28; claims 1-4 * | 1-7 | C08L75/04 C08J9/00 |
| A | EP-A-0 567 190 (BROMINE COMPOUNDS) * page 4, line 1 - line 47; claims 1-11 * | 1 | |
| A | US-A-3 063 954 (GALIZIA) * column 2, line 23 - column 3, line 22; claims 1-3 * | 1 | |
| A | EP-A-0 478 332 (ARCO) * claims * | 1 | |
| D | & US-A-5 250 581 | | |

| | | TECHNICAL FIELDS SEARCHED (Int.Cl.6) |
|---|---|---|
| | | C08L C08J C08G |

The present search report has been drawn up for all claims

| Place of search | Date of completion of the search | Examiner |
|---|---|---|
| THE HAGUE | 27 February 1995 | Bourgonje, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)